Europäisches Patentamt

European Patent Office

Office européen des brevets

(11) Publication number: **0 191 569**
A2

# EUROPEAN PATENT APPLICATION

(21) Application number: **86300519.5**

(51) Int. Cl.⁴: **H 01 M 2/16, H 01 M 6/14**

(22) Date of filing: **27.01.86**

(30) Priority: **11.02.85 US 700105**

(43) Date of publication of application: **20.08.86**
**Bulletin 86/34**

(84) Designated Contracting States: **DE FR GB SE**

(71) Applicant: **SAFT AMERICA INC., 711 Industrial**
**Boulevard, Valdosta Georgia, 31603-1886 (US)**

(72) Inventor: **Webber, Bruce D., 611 Oak Hill Road,**
**Catonsville Maryland 21228 (US)**

(74) Representative: **Raynor, John et al, W.H. Beck, Greener**
**& Co 7 Stone Buildings Lincoln's Inn, London WC2A 3SZ**
**(GB)**

(54) **Battery cell with woven glass fiber separator.**

(57) Surprising electrochemical battery cell capacities are
achieved utilizing a woven glass fiber fabric as the means to
physically separate an anode and a catode.

ACTORUM AG

# BATTERY CELL WITH WOVEN GLASS FIBER SEPARATOR

## INTRODUCTION

The present invention generally relates to electrochemical battery cells of the type including an anode, a cathode, an electrolyte solution to establish electrochemical communication between the anode and cathode and a separator disposed between the anode and cathode so as to physically separate same. More particularly, the present invention resides in the novel discovery that surprising and unexpected electrochemical battery cell capacities are achieved if the separator is a woven glass fiber fabric.

## BACKGROUND AND SUMMARY OF THE INVENTION

A variety of electrochemical battery cells have been developed to meet military, commercial and consumer requirements for portable electric power. Non-aqueous battery cells based upon an active metal anode and a suitable cathode material immersed in a water-free electrolyte medium are preferred for a diverse range of applications in which both high cell voltages and energy densities are desirable. Many types of non-aqueous batteries have been proposed, the majority of which are based upon a lithium anode and a solid inorganic cathode immersed in an aprotic solvent, such as, propylene carbonate or dioxolane.

Other types of non-aqueous battery cells that are known are those which utilize lithium or calcium anodes and a carbon cathode immersed in an electrolyte, such as, sulfur dioxide, thionyl chloride, sulfuryl chloride or similar materials which function as both an electrolyte medium and a depolarizing agent in the battery cell. Such solvent-depolarized battery cells exhibit greater cell voltages and energy densities as compared to other conventional types of electrochemical battery cells and are thus of particular interest for applications requiring high power and/or a small-sized battery.

A separator is conventionally used in those types of battery cells briefly mentioned above so as to physically separate the anode and cathode to thus prevent direct electrical contact therebetween. Direct contact between an anode and a cathode at any point would, of course, result in an electrical short-circuit thereby causing useless expenditure of the battery's store of energy. In general, battery separators must be mechanically strong, electrically-insulating, sufficiently porous to permit ionic conduction through the electrolyte entrained in the separator and be chemically stable in the internal battery environment.

The requirement for chemical stability for non-aqueous batteries, however, is difficult to achieve. The internal environment of non-aqueous battery cells, and particularly of solvent-depolarized battery cells, is chemically aggressive towards plastics and natural fiber materials used as separators in more traditional types of batteries. For this reason, conventional solvent-depolarized batteries utilize a non-woven web or mat of glass fibers.

Glass fibers are highly insulating, stable in most non-aqueous battery environments and can be formed into non-woven webs or mat-structures for different battery applications. However, because glass fibers are inherently smooth, rod-like structures, they do not mechanically interlock with one another as easily as, for example, natural fibers when formed into non-woven webs. As such, non-woven webs of glass fibers tend to be mechanically weak.

To overcome this mechanical weakness, it is conventional to incorporate a resinous binder into the non-woven glass fiber web. That is, the non-woven glass fiber web preferably includes a resinous binder incorporated therein so as to, in effect, cause the fibers to more easily adhere to one another to thereby strengthen the resulting non-woven web. However, a problem still exists that the resinous binder in the non-woven glass web may be degraded by the environment inside the battery if the resinous binder is chemically attacked by the solvent or other components of the battery. Accordingly, reaction products from the degradation of the resinous binder may accumulate in the battery cell over time to such a degree whereby diminished cell and battery performance is evident by poor discharge performance, lowered capacity, or a propensity toward internal shorting or other deleterious effects.

The present invention solves the numerous problems identified briefly above with respect to conventional non-woven glass fiber webs used as separators in electrochemical battery cells. It has been discovered that a woven glass fiber fabric exhibits not only greater mechanical strength as compared to non-woven glass fiber webs, when used as a separator, but also dramatically increases the battery cell's performance.

The interlaced glass fibers of the woven fabric apparently contributes to the greater mechanical strength than can be achieved as compared to conventional non-woven glass fiber webs and without the addition of potentially unstable binder resins to the separator. In addition to the superior mechanical strength of a woven glass fiber separator, it has been surprisingly discovered that a significant increase in cell capacity is achieved when utilizing a woven glass fiber fabric as a separator in an electrochemical battery cell. Although the reason for this surprising and unexpected result is not fully understood at this time, the reader will gain further insight into the present invention after consideration is given to the detailed description of the preferred exemplary embodiment thereof which follows.

## BRIEF DESCRIPTION OF THE ACCOMPANYING DRAWING

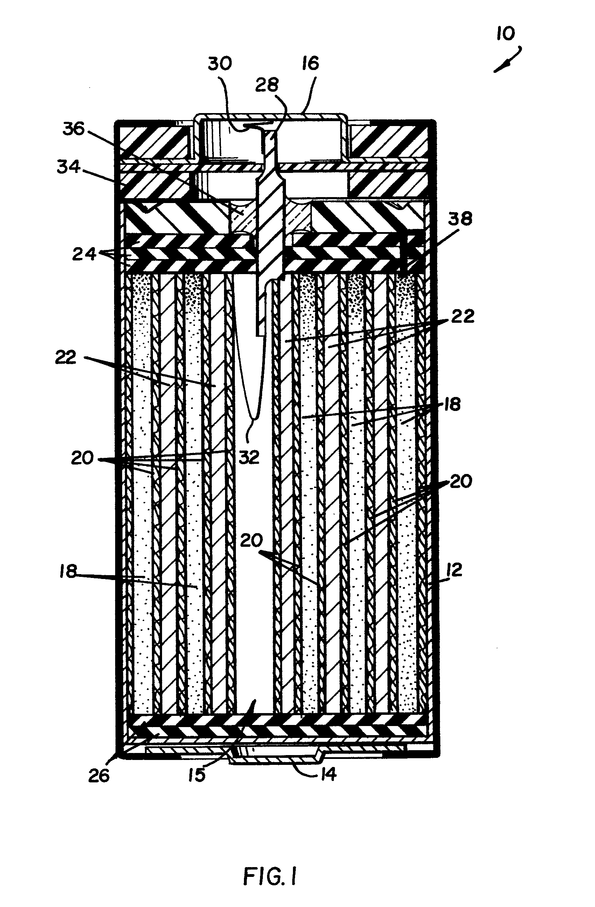

Reference will be hereinafter made to FIGURE 1 which depicts, in cross-section, a battery cell of the present invention.

## DETAILED DESCRIPTION OF THE
## PREFERRED EXEMPLARY EMBODIMENT

A battery cell 10 of the present invention is shown in accompanying FIGURE 1. As is conventional, battery cell 10 includes a metal can 12 which serves as a case for the internal battery structure 15. Can 12 includes positive and negative caps 14, 16, respectively, rigidly fixed at each end thereof. The interior space of can 12 is occupied in large part by the internal battery structure 15 which includes successive layers (as viewed in cross-section) of a cathode sheet 18, a separator 20, and an anode sheet 22. A suitable electrolyte solution (not shown) is also contained in the interior space of can 12 to establish electrochemical communication between the anode and cathode sheets, 18, 22, respectively.

The alternating and successive layers of cathode sheet 18, separator 20 and anode sheet 22 are formed in a conventional manner by spirally-rolling the cathode sheet 18, separator 20 and anode sheet 22 so as to form structure 15 and then placing the rolled structure 15 into the interior of can 12.

Upper and lower insulator members 24, 26, respectively, of a suitable electrically-insulating material are disposed at the upper and lower end portions of the rolled structure 15. Electrical communication is established between the anode sheet 22 and negative cap 16 by means of a feed-through member 28 having upper and lower electrical connectors 30, 32, respectively, to connect the feed-through member 28 to the anode sheet 22 on the one hand, and the feed-through member 28 to the negative cap 16 on the other hand. Feed-through member 28 is rigidly disposed by means of a cover 34 which includes an electrically-insulating seal 36 of a suitable vitreous material to seal and rigidly fix feed-through member 28 centrally relative to cover 34. Electrical communication between the cathode sheet 18 and the positive cap 14 is effected by, e.g., an electrical connector 38 which electrically connects the cathode sheet 18 to the metal can 12. Since positive cap 14 is itself in welded contact with the bottom end of can 12, electrical communication between the cathode sheet 18 and positive cap 14 is thereby achieved.

The separator 20 forms an important part of the battery cell 10 of the present invention and is a woven glass fiber fabric. Preferably, the glass fiber fabric comprising separator 20 is formed of E-type glass fibers having nominal fiber diameters of about 0.5 mm. The term "glass fiber" as used herein shall mean filaments formed by attenuation of one or more streams of molten glass and to strands formed when such glass fiber filaments are gathered together in forming. The term shall also mean yarns and cords formed by plying and/or twisting a multiplicity of strands together. The glass fiber fabric of separator 20 is preferably a plain weave having about 10 glass fibers per centimeter in both the warp and weft directions. Twill and satin weaves could also be advantageously utilized, if desired.

The woven glass fiber fabric separator 20 can be employed in virtually all battery cells where physical separation between an anode and cathode is required. For example, separator 20 can be utilized in battery cells whereby lithium or calcium comprise the anode sheet 22 and a solid inorganic cathode of, e.g., copper oxide, dioxide, chromium oxide and the like, comprise the cathode sheet 18. A particularly preferred battery cell in which the separator 20 is utilized includes a lithium-containing or calcium-containing anode and a carbon-containing cathode immersed in an electrolyte solution of the type having a suitable inorganic salt (e.g., $LiAlCl_4$) and sulfur dioxide, thionyl chloride, sulfuryl chloride and the like, with thionyl chloride being particularly preferred. Since the glass fiber fabric separator 20 is inherently chemically stable, it can also be exposed to a variety of aprotic solvents, such as, propylene carbonate or dioxolane.

A further understanding of the present invention will be gained after considering the following non-limiting examples thereof.

## EXAMPLE

To determine the efficacy of a woven glass fiber fabric as a separator in a battery cell, several battery cells (i.e, SAFT America Inc. Type LS16/34, 2/3A size, lithium/thionyl chloride cell), identified as cell Nos. 1-7 were constructed in a manner shown in accompanying FIGURE 1. Each cell was structurally identical to one another with the exception that cell Nos. 1-4 were provided with a conventional non-woven glass fiber web (Craneglass 230 manufactured by the Crane Paper Co. and distributed by Electrolock, Inc. of Chagrin Falls, Ohio) as separator 20 while cell Nos. 5-7 were provided with a woven glass fiber fabric (plain weave A2L14B fabric obtained from Mutual Industries, Philadelphia, PA) as separator 20.

Each cell of this example included a structurally-supported (e.g. by means of a metal grid) lithium anode containing at least 0.41 gram of lithium metal and a structurally-supported cathode containing at least 0.39 gram carbon, the balance being binder substances inert to the electrolyte solution e.g. PTFE.

The non-woven glass fiber web of cell Nos. 1-4 was vacuum dried overnight at about 250°C before use. The woven glass fiber fabric of cell Nos. 5-7 was heat-cleaned by subjecting a roll of the fabric to an elevated temperature of about 700°C for 60-75 hours in air to burn off surface contaminants, such as surface oils and other organic contaminants.

All cells were assembled in a dayroom of less than 1% relative humidity and were filled with a conventional electrolyte solution of thionyl chloride and an inorganic salt ($LiAlCl_4$) in an argon-filled glovebox. The cells were then welded closed after being filled with the electrolyte solution.

All cells were discharged at ambient temperature (25°C) through 26.8 ohm resistive loads until the cell voltages were below 1.0 volt. Voltage and time data during cell discharge were recorded with a Fluke 2200B Datalogger and were plotted with a Hewlett-Packard 7470A plotter. Capacity data were derived from the plotted discharge curves using cell voltages of 2.5 volts and 2.0 volts as reference points. The results are tabulated below.

### Discharge Characteristics of Battery Cells At 25°C Through a 26.8 ohm Load

| Cell Number | Mean Voltage (V) | Life to 2.5V (hr) | Capacity to 2.5V (mAh) | Life to 2.0V (hr) | Capacity to 2.0V (mAh) | Separator Type |
|---|---|---|---|---|---|---|
| 1 | 3.19 | 6.44 | 767 | 6.92 | 824 | non-woven |
| 2 | 3.21 | 6.22 | 745 | 6.58 | 788 | non-woven |
| 3 | 3.23 | 5.98 | 721 | 6.27 | 756 | non-woven |
| 4 | 3.23 | 5.20 | 627 | 5.45 | 657 | non-woven |
| 5 | 3.21 | 7.70 | 922 | 7.98 | 956 | woven |
| 6 | 3.28 | 8.45 | 1034 | 8.77 | 1073 | woven |
| 7 | 3.19 | 7.03 | 837 | 7.24 | 862 | woven |

The above data demonstrates that although the mean voltages of all cells were similar, significant and surprising increases in both the cell life and cell capacity to 2.5 volts and 2.0 volts were achieved with the battery cells 5-7 of this invention which utilized a woven glass fiber fabric as a separator. The functional advantages of the battery cells of this invention are thus dramatic when consideration is also given to the excellent mechanical strength of the woven glass fiber separators as compared to conventional non-woven glass fiber web separators.

Accordingly, while the present invention has been described in what is presently conceived to be the most preferred embodiment thereof, those in this art may recognize that many modifications may be made, which modifications shall be accorded the broadest scope of the appended claims so as to encompass all equivalent structures and/or assemblies.

0191569

- 10 -

CLAIMS

1. A battery cell comprising an anode, a cathode, an electrolyte solution, and separator means disposed between said anode and cathode for physically separating the same, wherein said separator means consists essentially of a woven glass fiber fabric.

2. A battery cell as in Claim 1 further comprising case means to house said anode, cathode, electrolyte solution and separator means.

3. A battery cell as in Claim 1 or Claim 2 wherein said anode comprises lithium metal.

4. A battery cell as in any one of Claims 1 to 3 wherein said cathode comprises carbon.

5. A battery cell as in any one of Claims 1 to 4 wherein said electrolyte solution is non-aqueous.

6. A battery cell as in any one of Claims 1 to 5 wherein said electrolyte solution also includes an inorganic salt.

7. A battery cell as in any one of Claims 1 to 6 wherein said electrolyte solution includes one member selected from the group consisting of thionyl chloride, sulfur dioxide, and sulfuryl chloride.

8. A battery cell as in Claim 7 wherein said electrolyte solution includes thionyl chloride and an inorganic salt.

9. A battery cell as in Claim 6 or Claim 8 wherein said inorganic salt is $LiAlCl_4$.

10.  A battery cell as in any one of Claims 1 to 9 wherein said woven fabric consists essentially of E-type glass fibers.

11.  A battery cell as in any one of Claims 1 to 10 wherein said woven fabric includes about 10 glass fibers per centimeter in both warp and weft directions.

FIG. 1